# EUROPÄISCHE PATENTSCHRIFT

(11) **EP 0 553 105 B1**
(45) Veröffentlichungstag und Bekanntmachung des Hinweises auf die Patenterteilung: **23.11.1994**
(21) Anmeldenummer: 91915306.4
(22) Anmeldetag: 23.08.1991
(51) Int. Cl.: F16D 65/16, F16D 55/226, F16D 65/56

(54) **SCHEIBENBREMSE FÜR FAHRZEUGE, INSBESONDERE STRASSENFAHRZEUGE**
DISC BRAKE FOR VEHICLES, ESPECIALLY ROAD VEHICLES
FREIN A DISQUE POUR VEHICULES, NOTAMMENT VEHICULES ROUTIERS

(30) Priorität: 17.10.1990 DE 4032885
(43) Veröffentlichungstag der Anmeldung: 04.08.1993
(73) Patentinhaber: KNORR-BREMSE Systeme für Nutzfahrzeuge GmbH, 80809 München (DE)
(72) Erfinder: BAUMGARTNER, Hans, D-8052 Moosburg (DE); IRASCHKO, Johann, D-8069 Schweitenkirchen (DE); SCHULLERUS, Otto, D-8000 München 90 (DE); TRIMPE, Robert, D-8000 München 50 (DE)
(74) Vertreter: KUHNEN, WACKER & PARTNER
(86) Internationale Anmeldenummer: DE9100684
(87) Internationale Veröffentlichungsnummer: WO9207202

(56) Entgegenhaltungen:
- DE-A- 1 600 175
- DE-A- 3 610 569
- DE-A- 3 716 202

## Beschreibung

Die Erfindung betrifft eine Scheibenbremse für Fahrzeuge, insbesondere Straßenfahrzeuge, mit einem einerseits einer Bremsscheibe eine Zuspannvorrichtung aufweisenden Bremssattel, wobei die Zuspannvorrichtung einen um eine die Achse der Bremsscheibe rechtwinklig kreuzende Drehachse drehbaren, bremsscheibenabgewandt vermittels eines im wesentlichen halbkreisartigen Drehlagers gegen den Bremssattel abgestützten Drehhebel aufweist, der bremsscheibenzugewandt vermittels eines Exzenterabschnitts etwa längsmittig an einer Traverse anliegt, die sich parallel zur Drehachse erstreckt und deren beide Ende über Druckstößel mit einer zuspannseitig im Bremssattel parallel zur Achse verschieblich gelagerten Bremsbacke gekoppelt sind, wobei die Traverse ebenfalls im wesentlich parallel zur Achse verschieblich geführt ist.

Eine derartige Scheibenbremse ist aus der DE-OS 37 16 202 bekannt. Bei dieser bekannten Scheibenbremse weist die Traverse eine Schiebeführung im Bremssattel auf, derart, daß sie nur parallel zur Achse der Bremsscheibe verschieblich ist. Zum Vermeiden von Reibung, Verschleiß und Hysterese bedingenden Querverschiebungen des Exzenterabschnitts auf der Traverse während Einbrems- und Lösevorgängen ist zwischen dem Exzenter und der Traverse eine Druckplatte vorgesehen, an welcher einerseits der Exzenterabschnitt anliegt und welche sich andererseits über ein ebenes Rollenlager gegen die Traverse abstützt. Im weiteren ist bei der bekannten Scheibenbremse der Exzenter im Bremssattel vermittels eines etwa halbkreisförmig ausgestalteten Wälzlagers drehgelagert und bremsscheibenseitig ist zwischen die Traverse und den Bremssattel eine Druckfeder eingespannt, welche die Traverse elastisch gegen den Exzenterabschnitt verspannt.

Aus der DE-OS 1 600 175 ist eine gattungsfremde Scheibenbremse bekannt, bei welcher der Exzenterabschnitt als eine exzentrisch in einer Drehwelle angeordnete Ausnehmung ausgebildet ist, wobei zwischen dem gerundeten Grund der Ausnehmung und einem ausschließlich parallel zur Achse der Bremsscheibe verschieblich geführten Druckstück ein Druckstößel mit beidseitig gerundeten Ende eingeordnet ist. Diese Anordnung beansprucht jedoch einen beachtlichen Bauraum, außerdem weist der Druckstößel keine zuverläßige Halterung auf, er kann unter Umständen aus seiner Sollager gelangen, was zum Ausfall der Scheibenbremse führt.

Es ist Aufgabe der Erfindung, eine Scheibenbremse der eingangs genannten Art derart auszugestalten, daß sie unter Beibehalten einer einbaugünstigen Bauform und einer reibungs-, verschleiß- und hysteresearmen Funktionsweise einen einfachen und billigen Aufbau aufweist.

Diese Aufgabe wird nach der Erfindung dadurch gelöst, daß als Exzenterabschnitt eine als zur Drehachse parallele Drehlagerung ausgebildete Lagerungsvorrichtung vorgesehen ist, die exzentrisch zur Drehachse am Drehhebel und in zur Bremsscheibe gerichteter Druckrichtung an der Traverse angreift und letztere ausschließlich drehbeweglich mit dem Drehhebel koppelt. Durch diese Ausbildung wird unter Inkaufnahme einer geringfügigen Kippbewegung der Traverse eine sehr einfache und funktionsgünstige Exzenterausbildung und -koppelung zur Traverse ermöglicht.

In den Unteransprüchen sind nach der weiteren Erfindung vorteilhafte Ausgestaltungsmöglaichkeiten für eine derart ausgebildete Scheibenbremse angegeben.

In den Zeichnungen sind Ausführungsformen für nach der Erfindung ausgebildete Scheibenbremsen dargestellt, und zwar zeigt
- Fig.1: einen Grundaufbau einer gattungsgemäßen Scheibenbremse,
- Fig.2: einen Axialschnitt durch eine erfindungsgemäße Scheibenbremse in vergrößertem Maßstab,
- Fig.3: einen zu Fig.2 rechtwinkligen und zur Achse parallelen Teilschnitt durch die erfindungswesentlichen Teile der Scheibenbremse und
- Fig.4 und Fig.5: schematisch in verkleinertem Maßstab abgewandelte Ausführungsformen der Scheibenbremse.

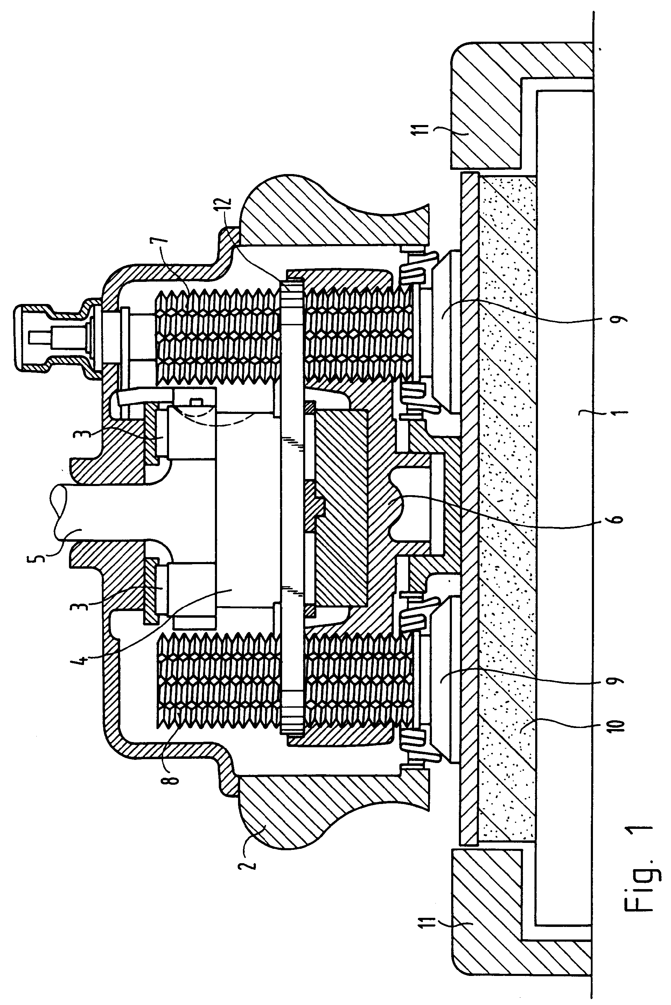

Die Fig.1 zeigt eine Bremsscheibe 1, welche von einem Bremssattel 2 übergriffen ist, von welchem nur ein zu einer Seite der Bremsscheibe 1 befindlicher, die Zuspannvorrichtung aufnehmender Teil dargestellt ist; im übrigen nicht dargestellten Teil ist der Bremssattel 2 in üblicher Weise ausgebildet und gelagert. Im Bremssattel 2 ist vermittels annähernd halbschalenförmiger Drehlagerungen 3 ein als Nockenhebel dienender Drehhebel 4 um eine zur Ebene der Bremsscheibe 1 parallel verlaufende Drehachse schwenkbar gelagert, der Antrieb des Drehhebels 4 erfolgt über einen Hebel 5, dessen Ende mit dem Kolben eines am Bremssattel 2 gehalterten, nicht dargestellten Bremszylinders oder aber auch mit einem mechanischen, ebefalls nicht dargestellten Bremsgestänge gekoppelt sein kann. Andererseits ist der Drehhebel 4 vermittels eines als Nocken dienenen Exzenters mit einer Traverse 6 gekoppelt, welche sich innerhalb des Bremssattels 2 im wesentlichen parallel zur Ebene der Bremsscheibe 1 erstreckt und senkrecht zu dieser Ebene beweglich ist. Die beiden Ende der Traverse 6 sind mit je einer Stellspindel 7 bzw. 8 justierbar verschraubt, die beiden Stellspindeln 7 und 8 erstrecken sich innerhalb des Bremssattels 2 senkrecht zur Eben der Bremsscheibe 1 und enden dieser zugewandt mit Druckstücken 9, an welchen eine gegen die Bremsscheibe 1 anpressbare Bremsbacke 10 anliegt. Die Bremsbacke 10 ist insbesonder in Umfangsrichtung zur Bremsscheibe 1 an Halterungen 11 quer zur Bremsscheibe 1 verschieblich geführt, die Halterungen 11 können wie üblich dem Bremssattel 2 oder einem Bremsträger zugehören. Die beiden Stellspindel 7 und 8 weisen ihr Gewinde durchschneidende Axialverzahnung auf, in welcher eine Innenverzahnung je eines Zahnrades eingreift, deren jedes auf einer Stellspindel 7 bzw. 8 undverdrehbar, aber axial verschieblich gelagert ist. Die Zahnräder sind in Fig.1 von einem Zahnriemen 12 verdeckt, vermittels welchen sie drehfest sie miteinander gekoppelt sind. In Abänderung zu dieser Ausführung ist es natürlich möglich, die Zahnräder in anderer Weise unverdrehbar, aber axial verschieblich mit den Stellspindeln 7 bzw. 8 zu koppeln. Des weiteren ist wenigstens ein hier nicht weiter interessierender Spielnachstellantrieb vorgesehen, vermittels welchem die beiden Stellspindeln 7 und 8 synchron derart verschraubbar sind, daß im Lösezustand der Scheibenbremse unabhängig vom Verschleiß der Bremsbacke 10 bzw. einer gegenüberliegenden Bremsbacke ein Sollösehub eingehalten wird.

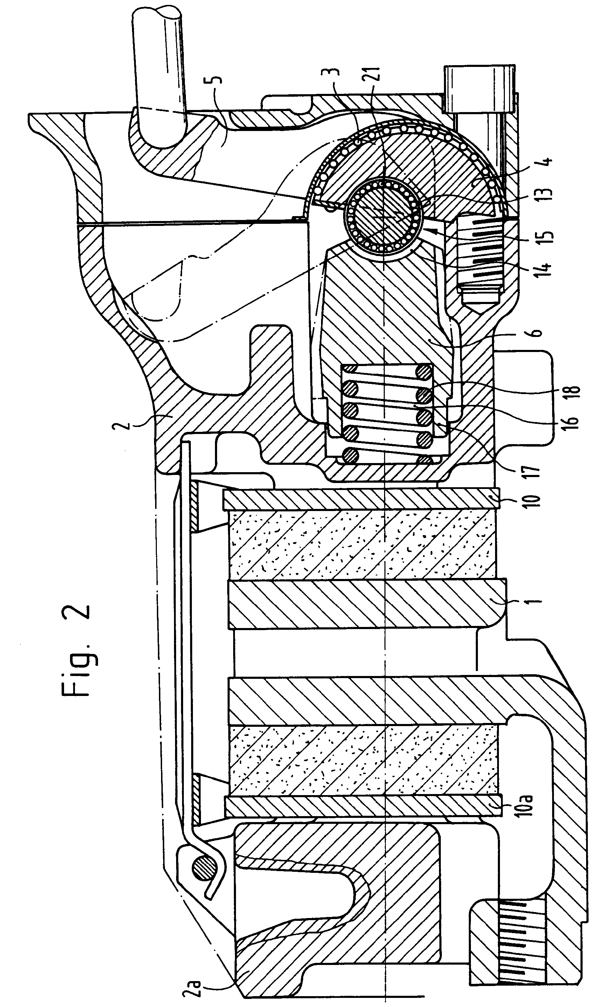

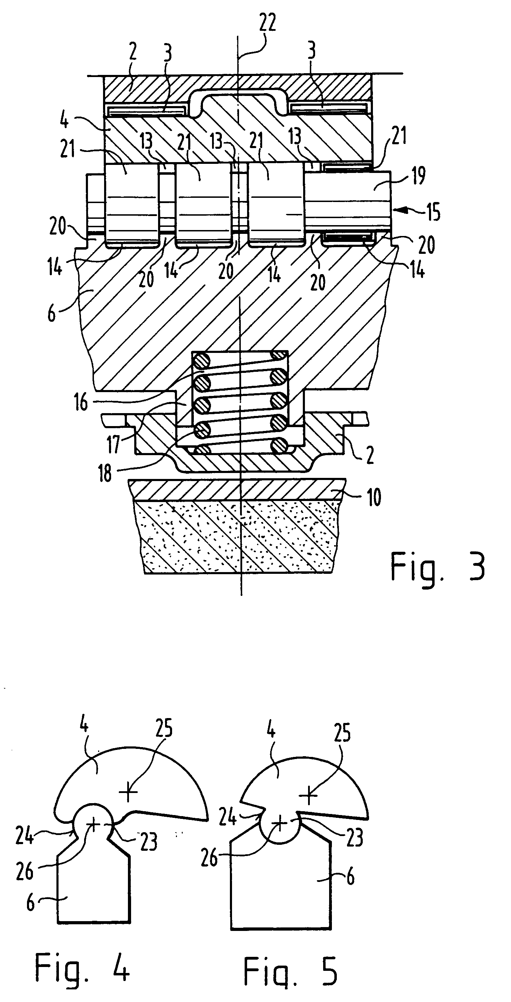

Gemäß Fig.2 und 3 ist die Drehlagerung 3 als im wesentlichen halbkreisartiges Wälzlager zwischen dem Drehhebel 4 und dem Bremssattel 2 bzw. einem mit diesem fest verbundenen Teil ausgebildet. Der Hebel 5 nimmt bei gelöster Scheibenbremse die mit durchgehenden Strichen und bei maximal eingebremster Scheibenbremse die strichpunktiert dargestellte Lage ein. Der im Querschnitt etwa halbzylindrische Drehhebel 4 weist bremsscheibenzugewandt exzentrisch zur Drehachse der Drehlagerung 3 eine etwa halbkreisförmige Ausnehmung 13 auf, welcher eine entsprechende, ebenfalls etwa halbkreisförmige Ausnehmung 14 gegenübersteht, welche bremsscheibenabgewandt an der Traverse 6 angeordnet ist. In die beiden Ausnehmungen 13 und 14 greift eine im Querschnitt im wesentlichen zylindrische Lagerungsvorrichtung 15 ein, welche später im einzelnen beschrieben wird. Bremsscheibenzugewandt weist die Traverse 6 eine sacklochartige Ausnehmung 16 auf, welche von einem in Richtung zur Bremsscheibe 1 auskragenden, rohrartigen Ansatz 17 umgeben ist. Der den bremsscheibenseitigen Endbereich der Traverse 6 bildende Ansatz 17 ist in einer entsprechenden Ausnehmung des Bremssattels 2 rechtwinklig zur Ebene der Bremsscheibe 1 mit Spiel schiebegelagert, derart, daß die Traverse 6 geringe Schwenkbewegungen in der Zeichenebene der Fig.2 ausführen kann. In der Ausnehmung 16 befindet sich eine Feder 18, welche zwischen die Traverse 6 und den Bremssattel 2 eingespannt ist und die Traverse 6 in Richtung zum Drehhebel 4 hin belastet.

Gegenüberliegend zur Bremsbacke 10 ist an die Bremsscheibe 1 gemäß Fig.2 vermittels eines Bremsssattelteiles 2a eine Bremsbacke 10a andrückbar.

Die Lagerungsvorrichtung 15 weist gemäß Fig.2 und 3 einen Bolzen 19 auf, der sich über die Breite des Drehhebels 4 erstreckt und der von mehreren, in axialem Abstand zueinander in die Ausnehmung 14 vospringenden, ebenfalls etwa halbkreisförmig und dem Umfang des Bolzens 19 angepaßt endenden Stegen 20 gegen die Traverse 6 abgestützt bzw. an dieser gehaltert ist. Auf dem Bolzen 19 befinden sich vier mit axialem Abstand zueinander zwischen die Stege 20 mit Radialspiel zur Traverse 6 eingreifende Wälzlager 21, deren Außenringe sich gegen die Wandung der Ausnehmung 13 des Drehhebels 4 abstützen; jeweils eines der Wälzlager 21 ist in Fig.2 und 3 geschnitten dargestellt.

Es ist ersichtlich, daß beim Drehen des Drehhebels 4 um die Drehlagerung 3 vermittels des Hebels 5 gemäß Fig.2 entgegen dem Uhrzeigersinn, wie es zum Einbremsen erforderlich ist, die Lagerungsvorrichtung 15 auf einem Kreisbogen um die Drehachse der Drehlagerung 3 im wesentlichen nach links verschwenkt wird, wobei die Traverse 6 unter leichter Schwenkbewegung um ihre Schiebelagerung am Ansatz 17 nach links bewegt wird, wodurch die Scheibenbremse in bekannter und daher nicht weiter zu beschreibender Weise angelegt und zugespannt wird. Am Drehhebel 4 und der Lagerungsvorrichtung 15 treten nur reine Rollbewegungen auf kleinen Hebelarmen auf, die nur einen äußerst geringen Widerstand mit entsprechend geringem Verschleiß verursachen und daher nur eine unwesentliche Hysterese zwischen Einbrems- und Lösevorgang bewirken können. Die als Exzenter am Drehhebel 4 dienende Lagerungsvorrichtung 15 besteht dabei aus handelsbüblichen und dementsprechend billigen, bewährten und funktionssicheren Einzelteilen.

In Abänderung zum vorstehend beschriebenen Ausführungsbeispiel ist es selbstverständlich auch möglich, die Lagerungsvorrichtung 15 andersartig, beispiesweise mit nur einem stärkeren oder mit drei Wälzlagern auszubilden. Auch können die Abstützungen des Bolzens 19 und der Wälzlagern 21 an der Traverse 6 bzw. dem Drehhebel 4 vertauscht werden. Insbesondere kann der Bolzen 19 am ihn abstützenden oder haltenden Teil fest gehaltert werden; entsprechendes ist für die Außenringe der Wälzlager 21 möglich. Bei allen diesen Ausführungsformen ist es zweckmäßig, die Anordnung symmetrisch zu einer Symmetrieebene 22 auszubilden, welche die Achse der Bremsscheibe 1 beinhaltet und den Drehhebel 4 längsteilt.

Infolge der kleinen Hebelarme, auf welchen sowohl die Wälzlager 21 der Lagerungsvorrichtung 15 wie auch die Drehlagerung 3 wirken, ist es möglich, anstelle eines oder beider dieser Wälzlagerungen Gleitlagerungen vorzusehen, welche vorzugsweise mit selbstschmierenden, d.h. integriert Schmierstoff enthaltenden Lagerschalen auszustatten sind. Dabei ist es auch möglich, anstelle der nach Fig.2 vollständig kreisförmigen Wälzlager 21 eine sich nur über einem Halbkreis oder Drittelkreis erstreckende Lagerschale zwischen dem Bolzen 19 und dem sich drehbar gegen diesen abstützenden Teil, nach dem dargestellten Ausführungsbeispiel dem Drehhebel 4, einzuordnen. Durch Nutzung dieser Gleitlager sind die Erstellungskosten der Scheibenbremse weiter senkbar.

In Abänderung zu den vorstehend beschriebenen Ausführungsbeispielen ist es gemäß Fig.4 und 5 auch möglich, an einem der Teile Traverse 6 (Fig.4) oder Drehhebel 4 (Fig.5) einen Vorsprung 23 fest anzuordnen, welcher zum jeweils anderen Teil vorspringt und welcher diesem anderen Teil zugewandt eine sich etwa um einen Dreiviertelkreis erstreckende Zylinderfläche 24 um eine zur Drehachse 25 des Drehhebels 4, also der Drehlagerung 3, parallele Zylinderachse 26 aufweist. Das jeweils andere Teil, also der Drehhebel 4 nach Fig.4 bzw. die Traverse 6 nach Fig.5, weist eine dem Vorsprung 23 entsprechende, zylindrische Ausnehmung auf, in welche der Vorsprung 23 drehbar eingreift. Auch bei dieser Ausführungsform kann das aus dem Vorsprung 23 und der in aufnehmenden Ausnehmung gebildete Drehlager zu einem Wälzlager oder einem Gleitlager mit selbstschmierender Lagerbuchse ausgebildet werden.

### Kurzfassung:

Die Scheibenbremse für Fahrzeuge weist einen Bremssattel (2) mit einseitiger Zuspannvorrichtung auf. Die Zuspannvorrichtung umfaßt einen im Bremssattel (2) um eine die Achse der Bremsscheibe (1) rechtwinklig kreuzende Drehachse drehbar gelagerten Drehhebel (4), welcher vermittels eines Exzenters auf eine Traverse (6) einzuwirken vermag, deren Enden über Druckstößel mit einer Bremsbacke (10) gekoppelt sind. Als Exzenter dient eine als zur Drehachse parallele Drehlagerung ausgebildete Lagerungsvorrichtung (15), die exzentrisch zur Drehachse den Drehhebel (4) mit der Traverse (6) ausschließlich drehbeweglich koppelt. Die Drehlagerung kann als Wälzlager (21) oder Gleitlager mit selbstschmierender Lagerschale ausgebildet sein, sie kann in einander gegenüberstehenden, halbzylindrischen Ausnehmungen (13 und 14) des Drehhebels (4) und der Traverse (6) angeordnet sein, wobei eines ihrer Teile fest mit dem Drehhebel (4) oder der Traverse (6) verbunden sein kann.

Die Zuspannung der Scheibenbremse ist somit reibungs-, verschleiß- und hysteresearm ausbildbar.

### Bezugszeichenliste

- 1: Bremsscheibe
- 2: Bremssattel
- 2a: Bremssattelteil
- 3: Drehlagerung
- 4: Drehhebel
- 5: Hebel
- 6: Traverse
- 7: Stellspindel
- 8: Stellspindel
- 9: Druckstück
- 10: Bremsbacke
- 10a: Bremsbacke
- 11: Halterungen
- 12: Zahnriemen
- 13: Ausnehmung
- 14: Ausnehmung
- 15: Lagervorrichtung
- 16: Ausnehmung
- 17: Ansatz
- 18: Feder
- 19: Bolzen
- 20: Steg
- 21: Wälzlager
- 22: Symmetrieebene
- 23: Vorsprung
- 24: Zylinderfläche
- 25: Drehachse
- 26: Zylinderachse

## Patentansprüche

1. Scheibenbremse für Fahrzeuge, insbesondere für Straßenfahrzeuge, mit einem einerseits einer Bremsscheibe (1) eine Zuspannvorrichtung aufweisenden Bremssattel (2), wobei die Zuspannvorrichtung einen um eine die Achse der Bremsscheibe (1) rechtwinklig kreuzende Drehachse (25) drehbaren, bremsscheibenabgewandt vermittels eines im wesentlichen halbkreisartigen Drehlagers (3) gegen den Bremssattel (2) abgestützten Drehhebel (4) aufweist, der bremsscheibenzugewandt mittels eines Exzenterabschnitts etwa längsmittig an einer Traverse (6) anliegt, die sich parallel zur Drehachse (25) erstreckt und deren beide Enden über Druckstößel mit einer zuspannseitig im Bremssattel (2) parallel zur Achse verschieblich gelagerten Bremsbacke (10) gekoppelt sind, wobei die Traverse (6) ebenfalls im wesentlichen parallel zur Achse verschieblich geführt ist,
dadurch gekennzeichnet, daß als Exzenterabschnitt eine als zur Drehachse (25) parallele Drehlagerung ausgebildete Lagerungsvorrichtung (15) vorgesehen ist, die exzentrisch zur Drehachse (25) am Drehhebel (4) und mit zur Bremsscheibe (1) gerichteter Druckrichtung an der Traverse (6) angreift und letztere ausschließlich drehbeweglich mit dem Drehhebel (4) koppelt.

2. Scheibenbremse nach Anspruch 1, dadurch gekennzeichnet, daß der Drehhebel (4) und die Traverse (6) einander zugewandte, etwa halbkreisförmige Ausnehmungen (13 bzw. 14) aufweisen, in welche die Lagerungsvorrichtung (15) eingreift.

3. Scheibenbremse nach Anspruch 2, dadurch gekennzeichnet, daß die Lagerungsvorrichtung (15) wenigstens einen Bolzen (19) mit wenigstens einem auf diesem befindlichen Drehlager (21) aufweist, wobei der Bolzen (19) gegen das eine und das Drehlager (21) gegen das andere der beiden Teile Drehhebel (4) und Traverse (6) abgestützt ist.

4. Scheibenbremse nach Anspruch 3, dadurch gekennzeichnet, daß wenigstens eines der Teile Bolzen (19) oder Drehlager (21) der Lagerungsvorrichtung (15) am sich jeweils gegen dieses Teil abstützenden Teil Drehhebel (4) oder Traverse (6) fest gehaltert ist.

5. Scheibenbremse nach Anspruch 3 oder 4, dadurch gekennzeichnet, daß auf dem Bolzen (19) beidseitig zu einer die Achse beinhaltenden und den Drehhebel (4) längsteilenden Symmetrieebene (22) je zwei Drehlager (21) nebeneinander angeordnet sind.

6. Scheibenbremse nach Anspruch 2, dadurch gekennzeichnet, daß die Lagerungsvorrichtung als Rundbolzen ausgebildet ist, der über wenigstens ein etwa halbkreisförmiges Drehlager drehbar gegen eines der Teile Drehhebel oder Traverse gelagert und am jeweils anderen Teil gehaltert ist.

7. Scheibenbremse nach Anspruch 1, dadurch gekennzeichnet, daß die Lagerungsvorrichtung einen an einem der Teile Drehhebel (4) oder Traverse (6) fest angeordneten, in Richtung zum jeweils anderen Teil (4 bzw. 6) vorspringenden Vorsprung (23) mit sich etwa um einen 3/4-Kreis erstreckender Zylinderfläche (24) um eine zur Drehachse (25) parallele Zylinderachse (26) aufweist, der zur Bildung der Drehlagerung drehbar in eine entsprechende Ausnehmung am jeweils anderen Teil (4 bzw. 6) eingreift.

8. Scheibenbremse nach Anspruch 1, 4, 6 oder 7, dadurch gekennzeichnet, daß wenigstens eines der Drehlager (3 und/oder 21) als Wälzlager ausgebildet ist.

9. Scheibenbrmse nach Anspruch 1, 4, 6 oder 7, dadurch gekennzeichnet, daß wenigstens eines der Drehlager als Gleitlager mit selbstschmierender Lagerbuchse ausgebildet ist.

10. Scheibenbremse nach einem oder mehreren der vorstehenden Ansprüche, dadurch gekennzeichnet, daß die Lagerungsvorrichtung (15) vermittels einer Feder (18) in Druckrichtung elastisch verspannt ist.

11. Scheibenbremse nach Anspruch 10, dadurch gekennzeichnet, daß die Feder (18) der Lagerungsvorrichtung in Richtung zur Bremsscheibe (1) gegenüberliegend an der Traverse (6) angreifend angeordnet und andererseits gegen den Bremssattel (2) abgestützt ist.

12. Scheibenbremse nach einem oder mehreren der vorstehenden Ansprüche, dadurch gekennzeichnet, daß die Traverse (6) nur in einem bremsscheibenseitigen Endbereich mit radialem Schwenkspiel zur Achse am Bremssattel (2) parallel zur Achse verschieblich gelagert ist.

13. Scheibenbremse nach den Ansprüchen 11 und 12, dadurch gekennzeichnet, daß die Traverse (6) bremsscheibenseitig einen rohrartigen Ansatz (17) mit einer sich in die Traverse (6) erstreckenden, sacklochartigen Ausnehmung (16) aufweist, daß die Feder (18) in die Ausnehmung (16) eingreift und daß der Ansatz (17) den im Bremssattel (2) schiebegelagerten, bremsscheibenseitigen Endbereich der Traverse (6) bildet.

## Claims

1. Disc brake for vehicles, in particular for road vehicles, having a calliper (2) which on one side of a brake disc (1) has a brake-application arrangement, with the brake-application arrangement having a rotary lever (4) which is rotatable about an axis of rotation (25) crossing the axis of the brake disc (1) at right angles, is stayed against the calliper (2) remotely from the brake disc by means of a substantially semi-circular rotary bearing (3), and facing the brake disc rests against a cross-member (6) by means of an eccentric section substantially longitudinally in the centre, which cross-member extends so as to be parallel to the axis of rotation (25) and the two ends of which cross-member are coupled by way of plungers with a brake shoe (10) which on the brake-application side is mounted in the calliper (2) so as to be displaceable parallel to the axis, with the cross-member (6) likewise being guided so as to be displaceable substantially parallel to the axis,
characterised in that provided as the eccentric section there is a mounting arrangement (15) which is formed as a rotary mounting parallel to the axis of rotation (25) and which eccentrically to the axis of rotation (25) acts on the rotary lever (4) and with the direction of pressure directed towards the brake disc (1) acts on the cross-member (6) and couples the latter in an exclusively rotatable manner with the rotary lever (4).

2. Disc brake according to claim 1, characterised in that the rotary lever (4) and the cross-member (6) have substantially semicircular recesses (13 and 14 respectively) which face each other and into which the mounting arrangement (15) engages.

3. Disc brake according to claim 2, characterised in that the mounting arrangement (15) has at least one pin (19) with at least one rotary bearing (21) located thereon, with the pin (19) being stayed against the one part and the rotary bearing (21) being stayed against the other part of the two parts rotary lever (4) and cross-member (6).

4. Disc brake according to claim 3, characterised in that at least one of the parts pin (19) or rotary bearing (21) of the mounting arrangement (15) is fixedly supported on the respective part rotary lever (4) or cross-member (6) that is stayed against this part.

5. Disc brake according to claim 3 or 4, characterised in that in each case two rotary bearings (21) are arranged side by side on the pin (19) on both sides of a plane of symmetry (22) which contains the axis and longitudinally divides the rotary lever (4).

6. Disc brake according to claim 2, characterised in that the mounting arrangement is formed as a round pin which is mounted by way of at least one substantially semicircular rotary bearing in a rotatable manner against one of the parts rotary lever or cross-member and is supported on the other respective part.

7. Disc brake according to claim 1, characterised in that the mounting arrangement has a projection (23) which is fixedly arranged on one of the parts rotary lever (4) or cross-member (6) and projects in the direction of the other respective part (4 or 6), has a cylinder surface (24), extending substantially about a three-quarter circle, about a cylinder axis (26) parallel to the axis of rotation (25) and engages into a corresponding recess on the other respective part (4 or 6) in a rotatable manner for the purpose of forming the rotary mounting.

8. Disc brake according to claim 1, 4, 6 or 7, characterised in that at least one of the rotary bearings (3 and/or 21) is formed as a rolling bearing.

9. Disc brake according to claim 1, 4, 6 or 7, characterised in that at least one of the rotary bearings is formed as a slide bearing with self-lubricating bearing bush.

10. Disc brake according to one or more of the preceding claims, characterised in that the mounting arrangement (15) is elastically braced by means of a spring (18) in the direction of pressure.

11. Disc brake according to claim 10, characterised in that the spring (18) is arranged lying opposite the mounting arrangement in the direction of the brake disc (1) and acting on the cross-member (6) and is stayed on the other side against the calliper (2).

12. Disc brake according to one or more of the preceding claims, characterised in that on the calliper (2) so as to be displaceable parallel to the axis the cross-member (6) is mounted just in one end region on the side of the disc brake with radial swing clearance relative to the axis.

13. Disc brake according to claims 11 and 12, characterised in that on the brake disc side the cross-member (6) has a tubular extension (17) with a blind hole recess (16) which extends into the cross-member (6), in that the spring (18) engages into the recess (16) and in that the extension (17) forms the end region of the cross-member (6) that is slide-mounted in the calliper (2) and is on the brake disc side.

## Revendications

1. Frein à disques pour véhicules automobiles, notamment pour véhicules routiers, comprenant, d'un côté d'un disque de frein (1), un étrier de frein comprenant un dispositif de serrage, le dispositif de serrage comportant un levier (4) tournant par rapport à un axe de rotation (25) coupant à angle droit l'axe du disque de frein appuyé sur l'étrier (2) de frein du côté éloigné du disque de frein au moyen d'un palier de rotation (3) sensiblement en forme de demi-cercle et s'appliquant du côté tourné vers le disque de frein au moyen d'une partie à excentrique à peu prés au milieu de la longueur sur une traverse (6) qui s'étend parallèlement à l'axe (25) de rotation et dont les deux extrémités sont couplées, par un poussoir, à une mâchoire de frein à disque monté coulissante parallèlement à l'axe dans l'étrier (2) de frein du côté du serrage, la traverse (6) étant montée également coulissante sensiblement parallèlement à l'axe,
caractérisé en ce qu'il est prévu comme partie à excentrique un dispositif à palier (15) constitué sous la forme d'un coussinet de pivotement parallèle à l'axe (25) de rotation, qui attaque de manière excentrée par rapport à l'axe (25) de rotation le levier (4) de rotation et avec une direction de poussée dirigée vers le disque (1) de frein, la traverse (6) et accouple cette dernière exclusivement en rotation au levier (4) tournant.

2. Frein à disque suivant la revendication 1, caractérisé en ce que le levier (4) tournant et la traverse (6) comporte des trous (13 et 14) sensiblement hémi-circulaires tournés l'un vers l'autre et dans lesquels pénètre le dispositif à palier (15).

3. Frein à disque suivant la revendication 2, caractérisé en ce que le dispositif à palier (15) comporte au moins un axe (19) ayant au moins un coussinet de pivotement (21) se trouvant sur lui, l'axe (19) s'appuyant sur l'une des deux pièces que sont le levier tournant (4) et la traverse (6) et le coussinet de pivotement (21) sur l'autre de ces deux pièces.

4. Frein à disque suivant la revendication 3, caractérisé en ce que l'une au moins des pièces que sont l'axe (19) ou le coussinet de pivotement (21) du dispositif de palier (15) est maintenu contre la pièce, à savoir le levier tournant (4) ou la traverse (6), s'y appuyant.

5. Frein à disque suivant la revendication 3 ou 4 caractérisé en ce que sur l'axe (19) sont disposés côte à côte de part et d'autre d'un plan de symétrie (22) passant par l'axe et coupant longitudinalement le levier tournant (4) respectivement deux coussinets de pivotement (21).

6. Frein à disque suivant la revendication 2, caractérisé en ce que le dispositif de palier est constitué sous la forme d'un axe circulaire qui est monté tournant sur au moins un coussinet de pivotement sensiblement hémi-circulaire par rapport à l'une des pièces que sont le levier tournant ou la traverse et qui est maintenu sur l'autre pièce.

7. Frein à disque suivant la revendication 1, caractérisé en ce que le dispositif de palier comporte une saillie (23) montée fixe sur l'une des pièces que sont le levier tournant (4) ou la traverse (6) faisant saillie en direction de l'autre pièce (4) ou (6), ayant une surface (24) cylindrique s'étendant environ sur 3/4 de cercle autour d'un axe de cylindre (26) parallèle à l'axe de rotation (25) et pénétrant en tournant pour former le palier tournant dans un évidement correspondant ménagé sur l'autre pièce (4 ou 6).

8. Frein à disque suivant la revendication 1, 4, 6 ou 7, caractérisé en ce qu'au moins l'un des coussinets de pivotement (3 et/ou 21) est constitué sous la forme d'un roulement à rouleau.

9. Frein à disque suivant la revendication 1, 4, 6 ou 7, caractérisé en ce qu'au moins l'un des coussinets de pivotement est constitué sous la forme d'un palier lisse à coussinet autolubrifiant.

10. Frein à disque suivant les revendications précédentes, caractérisé en ce que le dispositif de palier (15) est bloqué élastiquement en direction de poussée au moyen d'un ressort (18).

11. Frein à disque suivant la revendication 10, caractérisé en ce que le ressort (18) du dispositif de palier attaque la traverse (6) dans le sens opposé au disque de frein (1) et d'autre part s'appuie sur l'étrier de frein (2).

12. Frein à disque suivant les revendications précédentes, caractérisé en ce que la traverse (6) n'est montée coulissante parallèlement à l'axe que dans une partie d'extrémité se trouvant du côté du frein à disque, avec un jeu de rotation radial par rapport à l'axe sur l'étrier de freinage (2).

13. Frein à disque suivant la revendication 11 ou 12 caractérisé en ce que la traverse (6) comporte un prolongement (17) tubulaire du côté du frein à disque et ayant un trou borgne (16) s'étendant dans la traverse, en ce que le ressort (18) pénètre dans le trou borgne (16) et en ce que le prolongement (17) forme la partie d'extrémité de la traverse (6) se trouvant du côté du frein à disque et montér coulissante dans l'étrier de freinage (2).
